(19) Europäisches Patentamt / European Patent Office / Office européen des brevets

(11) **EP 4 095 273 A1**

(12) **EUROPEAN PATENT APPLICATION**
published in accordance with Art. 153(4) EPC

(43) Date of publication:
**30.11.2022 Bulletin 2022/48**

(21) Application number: **21744605.3**

(22) Date of filing: **13.01.2021**

(51) International Patent Classification (IPC):
**C22B 7/00** (2006.01)

(52) Cooperative Patent Classification (CPC):
**B07B 4/00; B07B 9/00; B09B 3/00; B09B 5/00;
C22B 7/00;** Y02P 10/20; Y02W 30/20; Y02W 30/60

(86) International application number:
**PCT/JP2021/000776**

(87) International publication number:
**WO 2021/149545 (29.07.2021 Gazette 2021/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.01.2020 JP 2020009722**

(71) Applicant: **Dowa Eco-System Co., Ltd.
Tokyo 101-0021 (JP)**

(72) Inventors:
• **TAHATA, Shota
Tokyo 101-0021 (JP)**
• **SASAKI, Hisashi
Tokyo 101-00021 (JP)**
• **WATANABE, Ryoei
Tokyo 101-0021 (JP)**

(74) Representative: **Müller-Boré & Partner
Patentanwälte PartG mbB
Friedenheimer Brücke 21
80639 München (DE)**

(54) **METAL RECOVERY METHOD**

(57) A metal recovery method includes crushing a photovoltaic module or a photovoltaic sheet-like structure to form debris; and sorting the debris, wherein the photovoltaic sheet-like structure is obtained by removing a glass substrate and a frame member from the photovoltaic module, and includes at least a photovoltaic cell, a metal pattern wired from the photovoltaic cell, and an encapsulant to encapsulate the photovoltaic cell and the metal pattern.

**EP 4 095 273 A1**

**Description**

TECHNICAL FIELD

The present disclosure relates to a metal recovery method.

BACKGROUND

Photovoltaic power generation uses a clean energy of sunlight, has a low environmental load, and therefore has been attracting attention with respect to a renewable energy. A photovoltaic module used for the photovoltaic power generation includes, for example, a glass substrate, an encapsulant for encapsulating the photovoltaic cell, a protective member (so-called back sheet), a metal pattern wired from the photovoltaic cell, and a frame member provided around the encapsulant.

In the past, photovoltaic modules have been disposed of after being used for a certain period of time. In recent years, however, there is a demand to recover valuable metal from a viewpoint of recycling. Examples of the valuable metal include copper and silver contained in the metal pattern.

Therefore, for example, a method of recovering valuable metal from a photovoltaic module is disclosed in Patent Document 1. Patent Document 1 proposes a method of recovering a photovoltaic cell after heating a photovoltaic module to remove a back sheet.

CITATION LIST

PATENT DOCUMENT

[Patent Document 1] Japanese Unexamined Patent Publication No. 2015-71162

SUMMARY OF THE DISCLOSURE

PROBLEMS TO BE SOLVED BY THE DISCLOSURE

Patent Document 1 regarding a technique for recycling a photovoltaic module requires a reasonable amount of time and labor to heat the photovoltaic module to remove a back sheet.

The present inventors have studied intensively to save the time and labor. That is, the present inventors have found that a certain crushing processing is performed on a photovoltaic module or a photovoltaic module only a part of which is intentionally decomposed (herein referred to as a "photovoltaic sheet-like structure," which is described in more detail below), as an object to be processed.

The recycling technique of Patent Document 1 decomposes a photovoltaic module, starting from a scratch, and therefore requires a reasonable amount of time and labor, as described above. For this reason, among the members that constitute the photovoltaic module, useful frame members and glass substrates are recovered quickly, and the remaining photovoltaic sheet-like structures are at best used as a raw material for metal smelting, at worst directly transferred to final disposal (landfill) sites, under present circumstances. However, when used as the raw material for metal smelting, the photovoltaic sheet-like structure contains too large amount of impurities for the raw material for smelting, in other words, the photovoltaic sheet-like structure has low content of the valuable metal such as Ag and Au. Therefore, it is difficult to say that the photovoltaic sheet-like structure is suitable as the raw material for metal smelting.

In view of such a situation in addition to the above-described findings, the present inventors have found it a new challenge to recover the recovery having concentrated valuable metal from the photovoltaic module or a photovoltaic sheet-like structure which is a partially decomposed intermediate of the photovoltaic module.

An object of the present disclosure is to provide a technique of concentrating the valuable metal contained in a photovoltaic module or a photovoltaic sheet-like structure which is a partially decomposed intermediate of the photovoltaic module.

SOLUTION TO PROBLEM

The present inventors have found that metal recovery by crushing and physically sorting debris is effective in recovering the valuable metal from a photovoltaic module or a photovoltaic sheet-like structure which is a partially decomposed intermediate of the photovoltaic module. This finding is based on a new knowledge that in photovoltaic modules or photovoltaic sheet-like structures, components containing the valuable metal and components containing an elements other than the valuable metal (e.g., carbon (C)) tend to differ in size of the powder formed upon crushing and are easily classified (for details, see Example section described below). It is also found that among particles having comparable particle size, powder containing a larger amount of the valuable metal tends to be heavier than powder containing a larger amount of elements other than the valuable metal.

Each of the following aspects is created based on the findings described above.

A first aspect of the present disclosure is a metal recovery method, including:

crushing a photovoltaic module or a photovoltaic sheet-like structure to form debris; and
sorting the debris, thereby separating them,
wherein the photovoltaic sheet-like structure is obtained by removing a glass substrate and a frame member from the photovoltaic module, and includes at least a photovoltaic cell, a metal pattern wired from the photovoltaic cell, and an encapsulant to encapsulate the photovoltaic cell and the metal pattern.

A second aspect of the present disclosure is the first aspect, wherein the crushing provides a shearing action to obtain the debris.

A third aspect of the present disclosure is the first or second aspect, wherein the sorting includes classifying the debris into fine powder having smaller particle size and coarse powder having larger particle size, thereby collecting the fine powder.

A fourth aspect of the present disclosure is any of the first to third aspects, wherein the sorting includes air-sorting.

A fifth aspect of the present disclosure is the fourth aspect, wherein in the air-sorting, the coarse powder is separated into heavy materials and other light materials by the air-sorting, and the heavy materials are collected.

A sixth aspect of the present disclosure is the fourth or fifth aspect, wherein in the air-sorting, a wind speed is 5 m/s or more and 20 m/s or less.

A seventh aspect of the present disclosure is any of the first to sixth aspects, wherein in the crushing, the photovoltaic sheet-like structure or the photovoltaic sheet-like structure is crushed so that the particle size of the debris is 10 mm or less.

An eighth aspect of the present disclosure is any of the third to seventh aspects, wherein the particle size of the fine powder is 4 mm or less.

A ninth aspect of the present disclosure is any of the first to eighth aspects, wherein in the crushing, a uniaxial crusher is used.

ADVANTAGEOUS EFFECT OF THE DISCLOSURE

According to the present disclosure, the valuable metal contained in the photovoltaic module can be concentrated and recovered.

BRIEF DESCRIPTION OF DRAWINGS

FIG. 1 is a schematic cross-sectional view of a photovoltaic sheet-like structure.
FIG. 2 is a schematic cross-sectional view of a photovoltaic module.

DESCRIPTION OF EMBODIMENTS

<An embodiment of the present disclosure >

The metal recovery method according to an embodiment of the present disclosure will be hereinafter described taking as an example a metal recovery from a photovoltaic sheet-like structure which is a partially decomposed intermediate of the photovoltaic module. The metal recovery method of this embodiment includes preparation, crushing, and sorting, each of which will be hereinafter described in detail.

(Preparation)

First, the photovoltaic sheet-like structure (hereinafter also referred to simply as sheet-like structure) is prepared, which is an object to be processed. The sheet-like structure is obtained by removing the glass substrate and the frame member from the photovoltaic module.

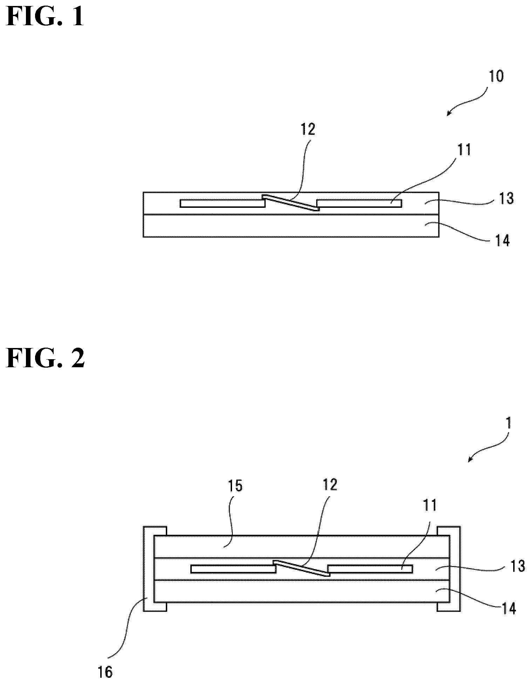

The photovoltaic module 1 is configured to include, for example, a plurality of photovoltaic cells 11, a metal pattern 12 wired from the photovoltaic cell 11, an encapsulant 13 encapsulating the photovoltaic cells 11 and the metal pattern 12, a protective member 14 provided on one surface of the encapsulant 13, a glass substrate 15 provided on the other surface of the encapsulant 13, and a frame member 16 surrounding a laminate including the encapsulant 13, the glass substrate 15, and the like, as illustrated in FIG. 2.

In the photovoltaic module 1, the photovoltaic cell 11 is formed of, for example, a semiconductor containing silicon and the like. The metal pattern 12 is a metal member wired from the photovoltaic cell 11, and includes, for example, a surface electrode provided on a surface of the photovoltaic cell 11 and a bus bar electrode electrically connecting between the photovoltaic cells 11. The metal pattern 12 contains, for example, the valuable metal such as copper (Cu) and silver (Ag), and the surface electrode is mainly formed of Ag, and the bus bar electrode is mainly formed of Cu. The encapsulant 13 is formed of, for example, a resin such as ethylene-vinyl acetate copolymer (EVA) or polyethylene. The protective member 14 is formed of, for example, a resin such as polyethylene terephthalate or fluororesin. The glass substrate 15 is formed of, for example, glass. The frame member 16 is formed of, for example, a metal or a resin.

The sheet-like structure 10 is configured as illustrated in FIG. 1 by removing the glass substrate 15 and the frame member 16 from the photovoltaic module 1. Specifically, the sheet-like structure 10 includes photovoltaic cells 11, a metal pattern 12 wired from the photovoltaic cell 11, an encapsulant 13 encapsulating the photovoltaic cells 11 and the metal pattern 12, and a protective member 14 provided on one surface of the encapsulant 13.

A method of removing the glass substrate 15 and the frame member 16 from the photovoltaic module 1 is not particularly limited, and a known method can be adopted. For removing the glass substrate 15, for example, a hot knife method, a roll crushing method, or a shot blasting method can be used.

(Crushing)

Subsequently, the sheet-like structure 10 is crushed. In the crushing of the sheet-like structure 10, for example, a member formed of a softer and more viscous material such as a resin tends to be crushed more coarsely, whereas a member formed of a harder and more brittle material such as a metal or Si tends to be crushed more finely. Specifically, the photovoltaic cell 11 containing silicon is likely to be crushed finely. The metal pattern 12 containing the valuable metal is also likely to be crushed finely. Among the metal patterns 12, the surface electrode provided on the surface of the photovoltaic cell 11 is configured to be thin, and is thus likely to be crushed while the photovoltaic cell 11 is crushed, and likely to be crushed more finely than the bus bar electrode. On the other hand, the encapsulant 13, the protective member 14, and the like, formed of the resin, are soft and thus crushed coarsely. Accordingly, the debris having smaller particle size is less likely to have resins and other materials mixed therein, and thus contains a higher proportion of the valuable metal. On the other hand, the debris having larger particle size contains a larger amount of resin and other materials, and thus tends to contain a lower proportion of the valuable metal.

The sheet-like structure 10 is preferably crushed so that the particle size of the debris is non-uniform, with wide particle size distribution, and varies widely. Accordingly, the photovoltaic cell 11 and the metal pattern 12 (particularly, the surface electrode) can be crushed finely, while the encapsulant 13 and the protective member 14 can remain coarse without being crushed excessively finely. Therefore, the valuable metal and the resin can be sorted as powders having different particle sizes.

The size of the debris is not particularly limited. However, the sheet-like structure 10 is preferably crushed so that the size of the debris is 20 mm or less from a viewpoint of suitably recovering the valuable metal at the time of physical sorting described below. The sheet-like structure 10 is crushed so that the size of the debris is more preferably 15 mm or less, and still more preferably 10 mm or less. By crushing in this way, the particle size distribution of the powder contained in the debris can be widened and the particle size can be appropriately varied, and the proportion of the valuable metal contained in the debris of smaller particle size can be increased.

As a method of crushing, shear crushing capable of providing a shearing action to the sheet-like structure 10 is preferable from a viewpoint of appropriately varying the particle size of the powder contained in the debris. As crushers to be used, for example, known crushers such as uniaxial crushers or biaxial crushers may be used. The uniaxial crushers are preferred. The biaxial crusher tends to finely and uniformly crush to provide debris having uniform particle size under certain crushing conditions, whereas the uniaxial crusher tends to coarsely crush to provide debris having non-uniform particle size and wider particle size distribution. That is, using the uniaxial crusher, the encapsulant 13 and the protective member 14 are not excessively finely crushed, and thus it is easy to suppress the resin from being mixed into the fine powder. Examples of the uniaxial crusher include a uniaxial cutter mill and a uniaxial hammer mill, with respect to the shape of the blade. The uniaxial cutter mill is preferable from a viewpoint of shear crushing.

The crushing conditions are not particularly limited, and the number of blades in the crusher, the clearance of the blades, the number of rotations of the blades, and the like may be appropriately adjusted to obtain wider particle size distribution of the debris. The sheet-like structure may be crushed in one step, or gradually crushed in multiple steps, such as primary crushing and secondary crushing.

(Sorting)

Subsequently, the resulting debris is sorted. In this embodiment, the debris is classified and air-sorted.

(Classification)

First, the resulting debris is classified into the fine powder having smaller particle size and the coarse powder having larger particle size. As described above, the photovoltaic cell 11 formed of silicon and the surface electrode among the metal patterns 12 are likely to be crushed finely, whereas a bus bar electrode among the metal patterns 12, and the encapsulant 13 and the protective member 14 formed of resin are hardly crushed finely. Therefore, the coarse powder tends to contain a larger amount of resin, with lower proportion of the valuable metal. In contrast, the fine powder tends to contain less resin, with higher proportion of the valuable metal. In this embodiment, after the classification, the fine powder with higher proportion of the valuable metal is collected.

The particle size of the fine powder, that is, a range of the particle size collected as the fine powder during the classification is not particularly limited, but is preferably 4 mm or less, more preferably 2 mm or less, and still more preferably 1 mm or less. The smaller the particle size of the powder, the less the incorporation of impurities such as resin and the higher the proportion of the valuable metal contained in the fine powder. Particularly, the proportion of Ag can be increased. On the other hand, when the particle size is excessively small, an amount of the valuable metal that can be recovered as the fine powder is decreased, possibly resulting in lower recovery efficiency. In this regard, by collecting powder of 4 mm or less as the fine powder, the recovery efficiency can be increased while maintaining a high proportion of the valuable metal.

As a method of classifying the debris, for example, dry or wet classification using gravity, inertial force, or centrifugal force, or sieving classification using a sieve can be adopted. Among them, sieving classification is preferred because of its ease of classification.

(Air-sorting)

Subsequently, the air-sorting is performed on the coarse powder classified by the classification. The coarse powder mainly contains the valuable metal derived from the bus bar electrode in the metal pattern 12, which cannot be recovered by the classification, and the resin derived from the encapsulant 13 and the protective member 14. The coarse powder is separated into the light materials and heavy materials by blowing wind against it. In the air-sorting, the coarse powder, which is hardly blown away when the wind is blown, is separated as the heavy materials. Such heavy materials include many coarse particles of high specific gravity. In contrast, the light materials of the coarse powder mainly contain resins. On the other hand, the heavy materials tend to contain a larger amount of the valuable metal, particularly Cu. In this embodiment, the heavy materials of the coarse powder, containing a larger amount of the valuable metal, are collected by the air-sorting.

In the air-sorting, the wind speed is not particularly limited, but is preferably 5 m/s or more and 20 m/s or less from a viewpoint of efficiently recovering the valuable metal. By performing the air-sorting at the above-described wind speed, the powder containing a larger amount of the valuable metal can be separated as the heavy materials from the coarse powder. The wind speed indicates a speed of the air hitting the powder.

The air-sorter to be used is not particularly limited, and a known sorter such as a circulation type, air knife type, blow-up type, suction type, or closed type sorter can be used. From a viewpoint of selectively and efficiently collecting the heavy materials, the circulation type, blow-up type, and closed type sorters are preferable. Instead of the air-sorting, the dry or wet classification using gravity, inertial force, centrifugal force, or the like (processing of sorting by specific gravity) can be used. However, the air-sorting is preferable from a viewpoint of processing ability and cost.

As described above, the fine powder separated by the classification and the heavy materials separated by the air-sorting of the coarse powder are collected from the sheet-like structure debris, thereby recovering the valuable metal contained in the sheet-like structure.

In this embodiment, since the sheet-like structure 10 obtained by removing the glass substrate 15 and the frame member 16 is crushed, foreign matter derived from the glass substrate 15 and the like can be suppressed from mixing into the debris. Therefore, the proportion of the valuable metal contained in the debris can be increased, and the powder containing the valuable metal can be efficiently separated when the debris is physically sorted. Specifically, the debris is classified and the fine powder is collected, thereby recovering the valuable metal derived from the surface electrode among the metal patterns 12. In addition, the coarse powder separated by classification is air-sorted and the heavy materials are collected, thereby recovering the valuable metal derived from the surface electrode and the valuable metal derived from the bus bar electrode, which cannot be recovered by the classification. That is, the sheet-like structure debris is classified and air-sorted, the fine powder and the heavy materials are collected, and impurities such as resin are removed, thereby concentrating the valuable metal contained in the sheet-like structure 10 and recovering them at a high recovery rate.

For example, the concentration rate of the valuable metal in the sheet-like structure 10 can be 1.5 times or more, preferably 2.5 times or more, more preferably 4 times or more, and the valuable metal can be recovered at a higher concentration. In addition, the valuable metal contained in the sheet-like structure 10 can be recovered in high yield. For example, the recovery rate of Ag can be 99% or more, and the recovery rate of Cu can be 80% or more. The concentration rate is a ratio obtained by dividing the concentration of the recovered valuable metal by the concentration of the valuable metal in the raw material.

Further, according to the metal recovery method of this embodiment, heat processing is not required after the preparation till the air-sorting, and therefore the valuable metal can be recovered from the photovoltaic module without increasing the environmental load.

Furthermore, according to the metal recovery method of this embodiment, heat processing is not required, and therefore the valuable metal can be recovered regardless of a component contained in the photovoltaic module. For example, when fluororesin or the like is used in the protective member of the photovoltaic module, there is a risk of generating fluoride gas by the heat processing. In this regard, according to the metal recovery method of this embodiment, there is no risk that a toxic gas is generated, and thus the valuable metal can be recovered regardless of the component contained in the photovoltaic module.

It is advisable to increase the purity of the recovered fine powder and heavy materials of the coarse powder by refining.

<Other Embodiments>

Although the embodiment of the present disclosure has been specifically described above, the present disclosure is not limited to the above-described embodiment and can be variously changed without departing from the gist of the present disclosure.

In the embodiment described above, the air-sorting is uniformly performed on the coarse powder to collect heavy materials. However, the present disclosure is not limited to the embodiment. In the air-sorting, the coarse powder may contain powder that is the light material containing a smaller amount of the valuable metal but is sorted as the heavy material because of its large particle size. From a viewpoint of suppressing the collection of the light materials, instead of uniformly performing the air-sorting on the coarse powder, the coarse powder may be classified into a plurality of groups of different particle size ranges, then each group may be air-sorted at an appropriate wind speed, and heavy materials obtained for each group may be collected. For example, after classifying the coarse powder into three groups: powder with a particle size of 2 mm to 4 mm, powder with a particle size of 4 mm to 6 mm, and powder with a particle size of 6 mm to 10 mm, each group may be air-sorted at an appropriate wind speed.

The above-described embodiment has been explained taking as an example a case where the photovoltaic sheet-like structure 10 includes the protective member 14. However, the present disclosure is not limited to the case. The sheet-like structure 10 may be preheated to remove the protective member 14 before the crushing. In this case, since the amount of the resin component contained in the debris can be reduced, the powder containing the valuable metal can be collected more efficiently during the sorting.

In the above-described embodiment, the object to be processed is the photovoltaic sheet-like structure 10. In the present disclosure, however, the object to be processed may be the photovoltaic module 1. In this case, the debris may also include powder derived from the glass substrate 15 and the frame member 16, and the valuable metal can be sorted and recovered as the fine powder and the heavy materials by the classification and the air-sorting described above.

EXAMPLES

Next, the present disclosure will be described in more detail based on examples, but the present disclosure is not limited to these examples.

[Example 1]

As the object to be processed, the photovoltaic sheet-like structure (PV sheet) was prepared which is obtainable by removing the glass substrate and the frame member from the photovoltaic module. Subsequently, the PV sheet was crushed using a nugget machine to pass through a 10 mm screen, so that the PV sheet was crushed to 10 mm or less. When the PV sheet did not pass through the screen, the process was repeated. Then, the resulting PV sheet debris was introduced into a sieving machine with a sieve aperture of 4 mm. As a result, the PV sheet debris was classified into powder having particle size of 1 mm or less and powder having particle size of 1 mm to 10 mm. In this example, among these powders, powder having particle size of 1 mm or less was collected as the fine powder. Next, the air-sorting was performed at a wind speed of 8 m/s on the coarse powder that had not been collected, that is, the powder having particle size of 1 mm to 10 mm. The heavy materials and the light materials were separated by the air-sorting, and the heavy materials were collected. As the nugget machine, a uniaxial cutter mill "SKC-25-540L" was used. As for crushing conditions, the number of blades was adjusted to 45, the clearance was adjusted to about 2 mm, and the rotation speed of the blades was adjusted to 630 rpm. As the air-sorter, "APS-250RB" was used.

The amount of the valuable metal contained in the collected powders was measured and the recovery rate from the PV sheet was determined.

Specifically, first of all, distribution ratio and degree of concentration (distribution ratio/mass ratio) of each component contained in the powder were determined for the powder having particle size of 1 mm or less and the powder having particle size of 1 mm to 10 mm, taking each of Ag and Cu contained in the PV sheet debris as 100. The results are illustrated in Table 1 below.

[Table 1]

| | Ag | | Cu | | Mass ratio |
| --- | --- | --- | --- | --- | --- |
| | Distribution ratio | Degree of concentration | Distribution ratio | Degree of concentration | [%] |
| PV Sheet debris | 100 | 1 | 100 | 1 | 100 |
| Powder of 1 mm to 10 mm (coarse powder) | 57.9 | 0.7 | 99.3 | 1.1 | 87.5 |
| Powders of 1 mm or less (fine powder) | 42.1 | 3.4 | 0.7 | 0.1 | 12.5 |

The proportions of Ag and Cu contained in the heavy materials and the light materials were also determined, the heavy materials and the light materials being obtained by the air-sorting performed on the coarse powder (powder of 1 mm to 10 mm). The results are illustrated in Table 2 below. Similar to Table 1, Table 2 indicates the proportions of the components, taking each of the components contained in the PV sheet debris as 100.

[Table 2]

| | Ag | | Cu | | Mass ratio |
| --- | --- | --- | --- | --- | --- |
| | Distribution ratio | Degree of concentration | Distribution ratio | Degree of concentration | [%] |
| PV Sheet debris | 100 | 1 | 100 | 1 | 100 |
| Light materials of 1 mm to 10 mm | 0.7 | 0.0 | 17.2 | 0.2 | 79.1 |
| Heavy materials of 1 mm to 10 mm | 57.2 | 6.8 | 82.1 | 9.8 | 8.4 |
| Powders of 1 mm or less (fine powder) | 42.1 | 3.4 | 0.7 | 0.1 | 12.5 |
| Recovery rate (heavy materials + fine powder) | 99.3 (A) | - | 82.8 (B) | - | 20.9 (C) |

$$\text{Concentration rate} = [(A+B)/2]/C$$

As illustrated in Table 1, the fine powder obtained by sieving contained 42.1% of the Ag contained in the PV sheet debris. On the other hand, the fine powder obtained by sieving contained 0.7% of the Cu contained in the PV sheet debris. In view of the foregoing, it is confirmed that Ag can be recovered in a larger amount than that of Cu by crushing the PV sheet to the size of 10 mm or less and collecting the fine powder. It is confirmed that Cu is contained in the coarse powder in a larger amount than in the fine powder. In the present disclosure, the fine powder and the heavy materials of the coarse powder are to be recovered.

As illustrated in Table 2, it is confirmed that when the air-sorting is performed on the coarse powder, the resulting heavy materials of 1 mm or more contains 57.2% of the Ag and 82.1% of the Cu contained in the PV sheet debris.

According to the results in Table 1 and Table 2, it is confirmed that 99.3% of the Ag and 82.8% of the Cu contained in the PV sheet debris can be recovered by collecting the fine powder obtained by the classification and the heavy materials obtained by the air-sorting of the coarse powder. In the finally obtained collection, the resin and Si are suppressed from being mixed in, and the valuable metals contained in the PV sheet can be concentrated 4.4 times. The concentration rate was calculated from the formula appearing under Table 2.

[Example 2]

The valuable metals were recovered in the same manner as in Example 1, except that powder having particle size of 2 mm or less was collected as the fine powder and powder having particle size from 2 mm to 10 mm was collected as the coarse powder.

For Example 2, the proportion of each component contained in each of the powder having particle size of 2 mm or less and the powder having particle size of 2 mm to 10 mm was determined. The results are illustrated in Table 3 below. The proportions of components contained in the heavy materials and the light materials obtained by performing the air-sorting on the coarse powder (powder of 2 mm to 10 mm) are illustrated in Table 4 below.

[Table 3]

| | Ag | | Cu | | Mass ratio |
| --- | --- | --- | --- | --- | --- |
| | Distribution ratio | Degree of concentration | Distribution ratio | Degree of concentration | [%] |
| PV Sheet debris | 100 | 1 | 100 | 1 | 100 |
| Powder of 2 mm to 10 mm (coarse powder) | 41.7 | 0.5 | 55.9 | 0.7 | 79 |
| Powders of 2 mm or less (fine powder) | 58.3 | 2.8 | 44.1 | 2.1 | 21 |

[Table 4]

| | Ag | | Cu | | Mass ratio |
| --- | --- | --- | --- | --- | --- |
| | Distribution ratio | Degree of concentration | Distribution ratio | Degree of concentration | [%] |
| PV Sheet debris | 100 | 1 | 100 | 1 | 100 |
| Light materials of 2 mm to 10 mm | 0.6 | 0.0 | 12.8 | 0.2 | 73.9 |
| Heavy materials of 2 mm to 10 mm | 41.1 | 8.1 | 43 | 8.4 | 5.1 |
| Powders of 2 mm or less (fine powder) | 58.3 | 2.8 | 44.2 | 2.1 | 21 |
| Recovery rate (heavy materials + fine powder) | 99.4 | - | 87.2 | - | 26.1 |

[Example 3]

The valuable metals were recovered in the same manner as in Example 1, except that powder having particle size of 4 mm or less was collected as the fine powder and powder having particle size from 4 mm to 10 mm was collected as the coarse powder.

For Example 3, the ratio of each component contained in each of the powder having a particle size of 4 mm or less and the powder having a particle size of 4 mm to 10 mm was determined. The results are illustrated in Table 5 below. Table 6 below illustrates the proportions of each component contained in the heavy materials and the light materials obtained by performing the air-sorting on the coarse powder (powder of 4 mm to 10 mm).

[Table 5]

| | Ag | | Cu | | Mass ratio |
| --- | --- | --- | --- | --- | --- |
| | Distribution ratio | Degree of concentration | Distribution ratio | Degree of concentration | [%] |
| PV Sheet debris | 100 | 1 | 100 | 1 | 100 |
| Powder of 4 mm to 10 mm (coarse powder) | 32.9 | 0.7 | 22 | 0.5 | 44.2 |
| Powders of 4 mm or less (fine powder) | 67.1 | 1.2 | 78 | 1.4 | 55.8 |

[Table 6]

| | Ag | | Cu | | Mass ratio |
| --- | --- | --- | --- | --- | --- |
| | Distribution ratio | Degree of concentration | Distribution ratio | Degree of concentration | [%] |
| PV Sheet debris | 100 | 1 | 100 | 1 | 100 |
| Light materials of 4 mm to 10 mm | 0.3 | 0.0 | 0.6 | 0.0 | 41.9 |
| Heavy materials of 4 mm to 10 mm | 32.6 | 14.2 | 21.4 | 9.3 | 2.3 |
| Powders of 4 mm or less (fine powder) | 67.1 | 1.2 | 78 | 1.4 | 55.8 |
| Recovery rate (heavy materials + fine powder) | 99.7 | - | 99.4 | - | 58.1 |

As illustrated in Tables 3 to 6, regarding the recovery rate of the valuable metals contained in the PV sheet, the recovery rate of Ag was 99.4% in Example 2 and 99.7% in Example 3. The recovery rate of Cu was 87.2% in Example 2 and 99.4% in Example 3. The concentration rate in the PV sheet was 3.6 times in Example 2 and 1.7 times in Example 3.

According to Examples 1 to 3, it is confirmed that the recovery rate of the valuable metals can be as high as, for example, 99% or more for Ag, and 80% or more for Cu. It is confirmed that possibility of impurities such as the resin being mixed in can be reduced, and the concentration rate can be increased while maintaining the recovery rate of the valuable metals high, by decreasing the size of the powder to be collected as the fine powder, in other words, by collecting as the fine powder of 2 mm or less, more particularly the powder of 1 mm or less, rather than the powder of 4 mm or less.

As described above, according to the metal recovery method of the present disclosure, the sheet-like structure obtained by removing the glass substrate and the frame member from the photovoltaic module is crushed, sieved, and air-sorted to recover the valuable metals such as Ag and Cu contained in the photovoltaic module at a high recovery rate. Since the glass substrate is removed in advance, glass can be suppressed from being mixed into the debris, a recovery with high concentration factor of the valuable metals can be collected at a high ratio while suppressing a loss of the expensive Ag. In addition, Ag and Cu can be recovered from the recovery to enhance effect of the recovery. In addition, since the heat processing is eliminated, the valuable metals can be recovered without increasing the environmental load.

List of Reference Numerals

1 Photovoltaic module
10 Photovoltaic sheet-like structure
11 Photovoltaic cell
12 Metal pattern
13 Encapsulant
14 Protective member
15 Glass substrate
16 Frame member

## Claims

1. A metal recovery method, comprising:

   crushing a photovoltaic module or a photovoltaic sheet-like structure to form debris; and
   sorting the debris,
   wherein the photovoltaic sheet-like structure is obtained by removing a glass substrate and a frame member from the photovoltaic module, and includes at least a photovoltaic cell, a metal pattern wired from the photovoltaic cell, and an encapsulant to encapsulate the photovoltaic cell and the metal pattern.

2. The metal recovery method according to claim 1, wherein the crushing provides a shearing action to obtain the debris.

3. The metal recovery method according to claim 1 or 2, wherein the sorting comprises classifying the debris into fine powder having smaller particle size and coarse powder having larger particle size, thereby collecting the fine powder.

4. The metal recovery method according to any of claims 1 to 3, wherein the sorting comprises air-sorting.

5. The metal recovery method according to claim 4, wherein in the air-sorting, the coarse powder is separated into heavy materials and other light materials by the air-sorting, and the heavy materials are collected.

6. The metal recovery method according to claim 4 or 5, wherein in the air-sorting, a wind speed is 5 m/s or more and 20 m/s or less.

7. The metal recovery method according to any one of claims 1 to 6, wherein in the crushing, the photovoltaic sheet-like structure or the photovoltaic sheet-like structure is crushed so that the particle size of the debris is 10 mm or less.

8. The metal recovery method according to any one of claims 3 to 7, wherein the particle size of the fine powder is 4 mm or less.

9. The metal recovery method according to any one of claims 1 to 8, wherein in the crushing, a uniaxial crusher is used.

## FIG. 1

## FIG. 2

## INTERNATIONAL SEARCH REPORT

| | International application No. |
|---|---|
| | PCT/JP2021/000776 |

**A. CLASSIFICATION OF SUBJECT MATTER**
C22B 7/00(2006.01)i
FI: C22B7/00 C
According to International Patent Classification (IPC) or to both national classification and IPC

**B. FIELDS SEARCHED**

Minimum documentation searched (classification system followed by classification symbols)
C22B7/00

Documentation searched other than minimum documentation to the extent that such documents are included in the fields searched
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2014-054593 A (TERUMU KK) 27 March 2014 (2014-03-27) claims | 1–9 |
| Y | claims | 1–9 |
| Y | JP 2019-205982 A (TOSHIBA ENVIRONMENTAL SOLUTIONS CORPORATION) 05 December 2019 (2019-12-05) claims | 1–9 |
| Y | JP 2016-203093 A (MITSUBISHI ELECTRIC CORP.) 08 December 2016 (2016-12-08) claims, paragraphs [0041], [0045] | 1–9 |
| X | KR 10-1842224 B1 (KOREA INSTITUTE OF ENERGY RESEARCH) 26 March 2018 (2018-03-26) claims, paragraphs [0005], [0084], [0087] | 1–9 |
| Y | claims, paragraphs [0005], [0084], [0087] | 1–9 |

☐ Further documents are listed in the continuation of Box C.   ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 26 February 2021 (26.02.2021) | 09 March 2021 (09.03.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

| INTERNATIONAL SEARCH REPORT Information on patent family members | | International application No. PCT/JP2021/000776 | |
|---|---|---|---|
| Patent Documents referred in the Report | Publication Date | Patent Family | Publication Date |
| JP 2014-054593 A | 27 Mar. 2014 | (Family: none) | |
| JP 2019-205982 A | 05 Dec. 2019 | (Family: none) | |
| JP 2016-203093 A | 08 Dec. 2016 | (Family: none) | |
| KR 10-1842224 B1 | 26 Mar. 2018 | US 2018/0133720 A1 claims, paragraphs [0084], [0087] CN 108067497 A | |

Form PCT/ISA/210 (patent family annex) (January 2015)

**REFERENCES CITED IN THE DESCRIPTION**

**Patent documents cited in the description**

- JP 2015071162 A